**Europäisches Patentamt**

**European Patent Office**

**Office européen des brevets**

(19)

(11) Veröffentlichungsnummer : **0 534 242 B1**

(12) # EUROPÄISCHE PATENTSCHRIFT

(45) Veröffentlichungstag der Patentschrift :
**29.11.95 Patentblatt 95/48**

(51) Int. Cl.$^6$ : **H02M 7/48**

(21) Anmeldenummer : **92115520.6**

(22) Anmeldetag : **10.09.92**

(54) **Verfahren zur Reduzierung von Spannungsschwingungen eines Zwischenkreismittenanschlusses eines Dreipunktumrichters.**

(30) Priorität : **24.09.91 DE 4131763**

(43) Veröffentlichungstag der Anmeldung :
**31.03.93 Patentblatt 93/13**

(45) Bekanntmachung des Hinweises auf die
Patenterteilung :
**29.11.95 Patentblatt 95/48**

(84) Benannte Vertragsstaaten :
**AT CH DE LI SE**

(56) Entgegenhaltungen :
**DE-A- 3 842 985**
**DE-A- 3 907 940**

(56) Entgegenhaltungen :
**PATENT ABSTRACTS OF JAPAN vol. 15, no.
130 (E-1051) 29. März 1991 & JP-A-30 15 273
Elektrische Bahnen 89 (1991) 11; Seiten
398/82-400/84; A. Weschta: Statische Umformer zur Kupplung von Bahnnetzen und Landesnetzen**

(73) Patentinhaber : **SIEMENS
AKTIENGESELLSCHAFT
Wittelsbacherplatz 2
D-80333 München (DE)**

(72) Erfinder : **Neubert, Rolf
Lessingstrasse 10
8522 Herzogenaurach (DE)**
Erfinder : **Schuster, Roland
Zeisigweg 12
8521 Möhrendorf (DE)**

EP 0 534 242 B1

## Beschreibung

Verfahren zur Reduzierung von Spannungsschwingungen eines Zwischenkreismittenanschlusses eines Dreipunkt-Zwischenkreises eines Spannungszwischenkreisumrichters

Die Erfindung bezieht sich auf ein Verfahren zur Reduzierung von Spannungsschwingungen eines Zwischenkreismittenanschlusses eines Dreipunkt-Zwischenkreises eines Spannungszwischenkreisumrichters zur Erzeugung einer einphasigen Spannung mit vorbestimmter Grundfrequenz, wobei auf seiner Einphasenseite ein erster und ein zweiter Dreipunkt-Vierquadranten-Steller vorgesehen sind, die jeweils eingangsseitig mit dem Dreipunkt-Zwischenkreis verbunden sind und die jeweils mittels zweier Grundfrequenztaktmuster eine einphasige Ausgangsspannung mit vorbestimmter Grundfrequenz erzeugen, die gegeneinander phasenverschoben sind.

Ein derartig aufgebauter Umformer ist aus dem nachveröffentlichten Aufsatz in 'Elektrische Bahnen' 89 (1991)11 S398/82-400/84 bekannt.

Die Umformung von Wechselspannungssystemen verschiedener Frequenz und Spannung wird oft mittels Zwischenkreisumrichtern durchgeführt. Im Leistungsbereich bis zu einigen MVA kam neben den Stromzwischenkreisumrichtern der Spannungszwischenkreisumrichter zum Einsatz. Dabei erfolgt die Übertragung der Leistung von einem Wechselspannungssystem zum anderen in zwei Stufen. Beispielsweise bei der Umformung eines Drehspannungssystem in ein Einphasensystem wird zunächst die dreiphasige Spannung mittels eines Pulswechselrichters in eine konstante, lastunabhängige Gleichspannung umgeformt. Diese konstante Zwischenkreis-Spannung wird anschließend mit einem Steller (Vierquadrantensteller-4QS) in eine Einphasenspannung umgeformt. Die veränderliche Spannungsamplitude und Frequenz eines Vierquadrantenstellers oder eines Pulswechselrichters wird beim Spannungszwischenkreisumrichter dadurch erreicht, daß die Ausgangsklemmen über Leistungshalbleiter an dem Zwischenkreis gemäß eines geeigneten Pulsmusters geschaltet werden. Werden nur die Plus- und Minusanschlüsse des Zwischenkreises verwendet, so spricht man von einer Zwei-Punkt-Schaltung. Bei einer Drei- Punkt-Schaltung ist zusätzlich ein Mittelpunkt des Zwischenkreises verfügbar.

Zur Erzeugung von Wechselspannungen mit stufenlos veränderlicher Amplitude und Frequenz wird die Gleichspannung des Zwischenkreises blockweise auf die Ausgangsklemmen durchgeschaltet. Man unterscheidet dabei höherpulsige Taktarten, bei dem sich eine Wechselspannungshalbschwingung aus mehreren, unterschiedlich langen Spannungsblöcken zusammensetzt und der Vollblock- oder Grundfrequenztaktung, bei der pro Halbschwingung nur ein Spannungsblock gebildet wird.

Das Durchschalten von Spannungsblöcken wird beim Spannungszwischenkreisumrichter zu einer blockförmigen Stromentnahme aus dem Zwischenkreis und demzufolge zu Spannungsschwingungen an den Stützkondensatoren dieses Zwischenkreises. Diese Spannungsschwankungen sollen 5 bis 10 % der Zwischenkreisspannung nicht überschreiten, damit die Ausgangsspannung des Spannungszwischenkreisumrichters nicht zu stark verzerrt wird. Die Einhaltung des Grenzwertes der Spannungsschwankung wurde bisher dadurch erreicht, daß ein entsprechend groß dimensionierter Zwischenkreiskondensator verwendet wurde.

Bei der Erzeugung einer einphasigen Wechselspannung fester Frequenz wird der Zwischenkreis zusätzlich mit der pendelnden Einphasenleistung, die mit doppelter Nennfrequenz schwingt, belastet. Um diese Schwingung weitgehend vom Zwischenkreiskondensator fernzuhalten, wird im Zwischenkreis ein Saugkreis verwendet, der auf die doppelte Nennfrequenz abgestimmt ist. Aufgrund von Schwankungen der Einphasenfrequenz und der Bauteiletoleranzen im Saugkreis, wird der Zwischenkreis-Kondensator entsprechend des Impedanzverhältnisses zum Saugkreis teilweise mit dieser schwingenden Leistung belastet.

Bei einem gattungsgemäßen Spannungszwischenkreisumrichter großer Leistung ist der Eingangssteller, der Zwischenkreis und der Ausgangssteller jeweils als Drei-Punkt-Schaltung ausgeführt. Beim Betrieb dieser Steller ist zur Minimierung der Stromrichterverluste eine möglichst niedrige Taktfrequenz anzuwenden. Der Einsatz der Vollblocktaktung ist unter diesem Aspekt ideal, da jedes Schaltelement während einer Periode nur einmal ein- und ausgeschaltet wird. Bei sehr niedrigen Einphasenfrequenzen, beispielsweise 16 2/3 Hz des Bahnnetzes, führt diese Vollblocktaktung zu hohen Welligkeiten der Zwischenkreis-Spannung. Speziell durch die halbseitige Belastung der Teilzwischenkreise der Drei-Punkt-Schaltung schwingt aer Zwischenkreismittelpunkt mit der Einphasengrundfrequenz.

Bei Betrieb mehrerer Dreipunkt-Vierquadranten-Steller in Grundfrequenztaktung an einem Dreipunkt-Zwischenkreis, wie sie beim statischen Netzkupplungsumformer eingesetzt werden, kommt es durch die periodisch einseitige Belastung des Zwischenkreises zu Spannungsschwingungen des Zwischenkreismittenanschlusses. Diese Spannungsschwingungen führen zu Verzerrungen der Ausgangsspannung und reduzieren damit gleichzeitig die Ausnutzbarkeit der verwendeten abschaltbaren Stromrichterventile.

Um die Zwischenkreis-Spannungsschwankungen während des Betriebs möglichst klein zu halten, müßte bei der Übertragung von einigen MW pro Teilzwischenkreis die Kapazität des Kondensators wenigstens 30 mF oder größer bemessen werden. Ein wesentliches Problem bei diesen großen Zwischenkreiskapazitäten ist - bedingt auch durch den notwendigen induktivitätsarmen Aufbau - im Fehlerfall die Beherrschung der Kurzschlußströme. Um im Kurzschlußfall die mechanische Deformation der Stromschienen zu vermeiden, muß entweder eine sehr massive und aufwendige Stromschienenkonstruktion gewählt werden oder die Zwischenkreis-Kondensatoren sind wesentlich kleiner zu dimensionieren, wodurch jedoch die Spannungswelligkeit wieder ansteigt.

Der Erfindung liegt nun die Aufgabe zugrunde, ein Taktverfahren für einen eingangsgenannten Spannungszwischenkreisumrichter mit mehreren auf seiner Einphasenseite angeordneten Dreipunkt-Vierquadranten-Stellern anzugeben, mit dem die Spannungsschwankungen, insbesondere die Mittelpunktschwingung mit Grundfrequenz, reduziert werden kann.

Diese Aufgabe wird mit den Merkmalen des Anspruchs 1 gelöst.

Durch diese erfindungsgemäße Taktmusterverschiebung wird erreicht, daß die multiplikative Erhöhung der Spannungsschwingung des Zwischenkreismittenanschlusses entsprechend der Dreipunkt-Vierquadranten-Steller-Anzahl vermieden wird. Mit dieser Taktmusterverschiebung tritt die einseitige Zwischenkreis-Belastung durch beispielsweise zwei Dreipunkt-Vierquadranten-Steller nicht gleichzeitig auf. Die einseitige Zwischenkreis-Belastung wechselt doppelt so häufig die Zwischenkreisseite und die effektive Stromzeitfläche, bei der nur eine Zwischenkreishälfte belastet ist, sinkt mit abnehmender Phasenverschiebung beider Dreipunkt-Vierquadranten-Steller-Ausgangsspannungen.

Bei einem vorteilhaften Verfahren eilt das Grundfrequenztaktmuster für eine erste Phase des zweiten Dreipunkt-Vierquadranten-Stellers gegenüber dem Grundfrequenztaktmuster für eine erste Phase des ersten Dreipunkt-Vierquadranten-Stellers um 45° nach und das Grundfrequenztaktmuster für eine zweite Phase des zweiten Dreipunkt-Vierquadranten-Stellers eilt gegenüber dem Grundfrequenztaktmuster für eine zweite Phase des ersten Dreipunkt-Vierquadranten-Stellers um 15° vor.

Durch dieses vorteilhafte Verfahren sind die Stromzeitflächen nur halb so groß, so daß bei gleicher Größe der Zwischenkreiskondensatoren im Vergleich zur Steuerung ohne Taktmusterverschiebung die doppelte Leistung übertragen werden kann.

Bei einem weiteren vorteilhaften Verfahren eilt das Grundfrequenztaktmuster für eine erste Phase des zweiten Dreipunkt-Vierquadranten-Stellers gegenüber dem Grundfrequenztaktmuster für eine erste Phase des ersten Dreipunkt-Vierquadranten-Stellers und das Grundfrequenztaktmuster für eine zweite Phase des zweiten Dreipunkt-Vierquadranten-Stellers gegenüber dem Grundfrequenztaktmuster für eine zweite Phase des ersten Dreipunkt-Vierquadranten-Stellers jeweils um 195° nach, wobei die Ausgangsklemmen des zweiten Dreipunkt-Vierquadranten-Stellers vertauscht werden.

Auch mit diesem vorteilhaften Verfahren werden die Spannungsschwankungen, insbesondere die Mittelpunktschwingung mit Grundfrequenz, am Zwischenkreismittenanschluß reduziert.

Werden mehr als zwei Dreipunkt-Vierquadranten-Stellers an einem Dreipunkt-Zwischenkreis betrieben, so werden jeweils zwei Dreipunkt-Vierquadranten-Steller zu einer Gruppe zusammengefaßt, deren Ausgangsspannungen möglichst eine kleine Phasenverschiebung aufweisen. Jedes Dreipunkt-Vierquadranten-Steller-Paar sollte dann nach einem der genannten Verfahren angesteuert werden.

Zur weiteren Verkleinerung der Mittelpunktschwingung des Dreipunktzwischenkreises kann dieses erfindungsgemäße Taktverfahren mit einer in einer parallelen europäischen Patentanmeldung EP-A-0534 285 angemeldeten Saugkreis-Schaltungsanordnung kombiniert werden.

Zur weiteren Erläuterung der Erfindung wird auf die Zeichnung Bezug genommen, in der mehrere Verfahren schematisch veranschaulicht sind.

| | |
|---|---|
| Figur 1 | zeigt ein Blockschaltbild eines bei statischen Netzkupplungsumformern verwendeten Spannungszwischenkreisumrichters, die |
| Figur 2 | zeigt ein Ersatzschaltbild eines Dreipunkt-Vierquadranten-Stellers mit einem eingangsseitigen Zwischenkreis mit Saugkreis, in den |
| Figuren 3 und 4 | ist jeweils in einem Diagramm über der Zeit t ein Grundfrequenztaktmuster einer Phase des Dreipunkt-Vierquadranten-Stellers nach Figur 2 dargestellt, die |
| Figur 5 | veranschaulicht in einem Diagramm über der Zeit t eine Ausgangsspannung des Dreipunkt-Vierquadranten-Stellers nach Figur 2, die |
| Figur 6 | zeigt zwei Dreipunkt-Vierquadranten-Steller an einem Dreipunkt-Zwischenkreis mit einem ausgangsseitigen Transformator, in den |
| Figuren 7,8,10,11,13,14,20 und 21 | sind jeweils in einen Diagramm über der Zeit t ein Grundfrequenztaktmuster einer Phase der beiden Dreipunkt-Vierquadranten-Steller nach Figur 6 dargestellt, die |
| Figuren 9,12,15,18,22,25 und 26 | veranschaulichen jeweils in einem Diagramm über der Zeit t eine |

3

| | Ausgangsspannung der Dreipunkt-Vierquadranten-Steller nach Figur 6, die |
| Figuren 16,17,23 und 24 | zeigen jeweils in einem Diagramm über der Zeit t ein verschobenes Grundfrequenztaktmuster einer Phase des zweiten Dreipunkt-Vierquadranten-Stellers nach Figur 6 und in der |
| Figur 19 | ist eine weitere Ausführungsform einer Dreipunktumrichters mit zwei Dreipunkt-Vierquadranten-Steller an einem Dreipunkt-Zwischenkreis dargestellt. |

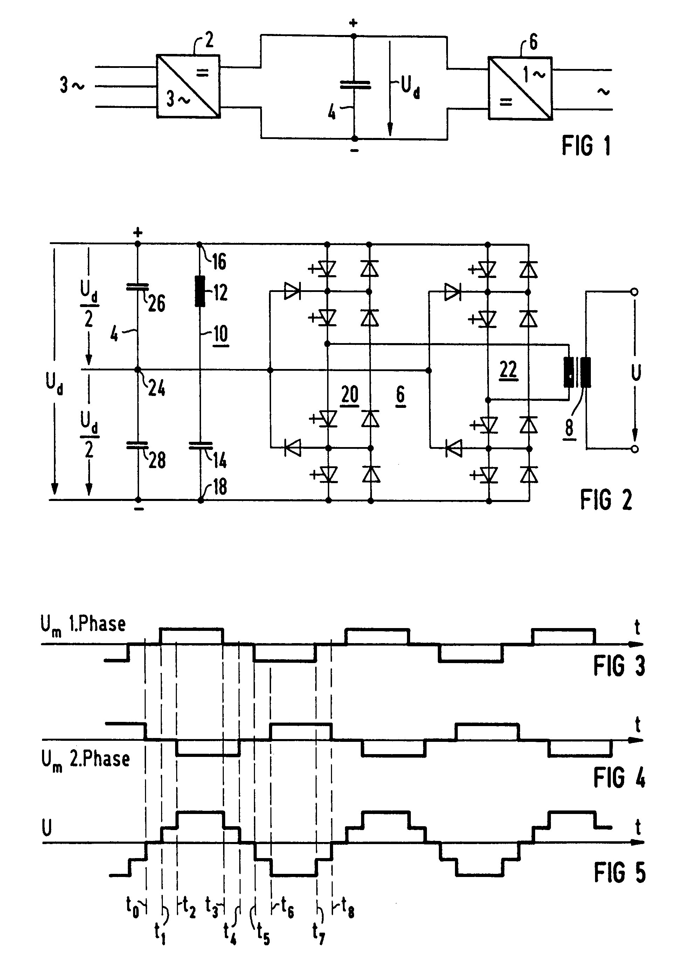

Die Figur 1 zeigt ein Blockschaltbild eines Spannungsumrichters, der aus einem Pulswechselrichter 2, einem Zwischenkreis 4 und einem Vierquadranten-Steller 6, auch 4QS genannt, besteht. Mittels dieses Spannungsumrichters werden Umformungen von Wechselspannungssystemen verschiedener Frequenz und Spannung durchgeführt. Derartige Spannungsumrichter werden auch statische Netzkupplungsumformer genannt. Im dargestellten Beispiel wird ein Drehspannungssystem mittels des Pulswechselrichters 2 in eine konstante, lastunabhängige Gleichspannung $U_d$ umgeformt. Diese konstante Zwischenkreis-Spannung $U_d$ wird anschließend mittels des Vierquadranten-Stellers 6 in eine Einphasenspannung, beispielsweise 16 2/3 Hz / 15 kV bzw. 50 Hz / 25 kV, wobei für die Spannungstransformation nicht näher dargestellte Transformatoren verwendet werden. Ebenfalls sind aus Übersichtlichkeitsgründen eine Steuer- und Regeleinrichtung für den Pulswechselrichter 2 und den Vierdranten-Steller 6 nicht dargestellt. Wie zu erkennen ist, werden nur die Plus- und Minus-Anschlüsse des Zwischenkreises 4 für die Erzeugung der Einphasenspannungen verwendet. Deshalb spricht man von einer Zweipunkt-Schaltung.

In Figur 2 ist eine Dreipunkt-Schaltung näher dargestellt, wobei aus Übersichtlichkeitsgründen nur der Zwischenkreis 4 und der Vierquadranten-Steller 6 mit ausgangsseitigem Transformator 8 näher dargestellt ist. Der Zwischenkreis 4 ist außerdem mit einem Saugkreis 10 versehen, der aus einer Reihenschaltung, bestehend aus einer Drossel 12 und einem Kondensator 14, besteht. Dieser Saugrkeis 10 ist jeweils mit einer Anschlußklemme 16 bzw. 18 mit dem Plus- bzw. Minusanschluß des Zwischenkreises 4 elektrisch verbunden.

Der Dreipunkt-Vierquadranten-Steller 6 besteht aus zwei Phasen 20 und 22, deren Wechselstromanschlüsse mittels einer Primärwicklung des Transformators 8 miteinander verbunden sind. Jede Brückenseite der Phase 20 bzw. 22 dieses Vierquadranten-Stellers 6 besteht aus zwei elektrisch in Reihe geschalteter abschaltbarer Stromrichterventile, denen jeweils eine Freilaufdiode antiparallel geschaltet ist. Als abschaltbare Stromrichterventile sind hier abschaltbare Thyristoren - Gate-Turn-Off-Thyristor GTO - vorgesehen. Der Verbindungspunkt zweier elektrisch in Reihe geschalteter GTO-Thyristoren jeder Brückenseite ist in bekannter Weise jeweils mit einer Entkopplungsdiode mit einer dritten Anschlußklemme 24 des Zwischenkreises 4 elektrisch leitend verbunden.

Zur Erzeugung der Einphasen-Wechselspannung U mit stufenlos veränderlicher Amplitude und Frequenz wird die Gleichspannung $U_d$ des Zwischenkreises 4 blockweise auf die Wechselstromanschlüsse des Dreipunkt-Vierquadranten-Stellers 6 durchgeschaltet. Dabei unterscheidet man höherpulsige Taktarten, bei dem sich eine Wechselspannungshalbschwingung aus mehreren, unterschiedlich langen Spannungsblöcken zusammensetzt und der Vollblock- oder Grundfrequenztaktung, bei der pro Halbschwingung nur ein Spannungsblock gebildet wird. Beim Betrieb von GTO-Stromrichtern am Spannungs-Zwischenkreis 4 zur Erzeugung von Wechselspannungssystemen ist zur Minimierung der Stromrichterverluste eine möglichst niedrige Taktfrequenz anzuwenden (Reduzierung der Schaltverluste). Der Einsatz der Vollblocktaktung ist unter diesem Aspekt ideal, da jedes abschaltbare Stromrichterventil der Stromrichter während einer Periode nur einmal ein- und ausgeschaltet wird.

In den Fiuren 3 und 4 ist jeweils in einem Diagramm über der Zeit t ein Grundfrequenztaktmuster einer Phase des Dreipunkt-Vierquadranten-Stellers 6 nach Figur 2 näher dargestellt. Durch diese versetzte Grundfrequenztaktung zweier Phasen ergibt sich eine treppenförmige Ausgangsspannung U mit der gewünschten Grundfrequenz $f_N$, die in einem Diagramm über der Zeit t in der Figur 5 näher dargestellt ist. Die Klemmenspannung kann folgende Werte annehmen: $-U_d$, $-U_d/2$, O, $U_2/2$, $U_d$.

Eine dieser drei Spannungen wird abwechselnd von jeder Phase des Dreipunkt-Vierquadranten-Stellers 6 auf die Wechselspannungsanschlüsse durchgeschaltet. Zur Steuerung der Spannungsamplitude kann die Breite der positiven und negativen Spannungsblöcke variiert werden. Die zunehmende Verzerrung der Ausgangsspannung U bei Verkleinerung der Blockbreiten setzt der Amplitudensteuerung eine natürliche Untergrenze.

Das Durchschalten von Spannungsblöcken führt beim Dreipunkt-Vierquadranten-Steller 6 zu einer blockförmigen Stromentnahme aus dem Zwischenkreis 4 und demzufolge zu Spannungsschwingungen an den Stützkondensatoren 26 und 28 des Zwischenkreises 4. Diese Spannungsschwankungen sollen 5 bis 10 % der Zwischenkreis-Spannung $U_d$ nicht überschreiten, damit die Ausgangsspannung U des Dreipunkt-Vierquadranten-Stellers 6 nicht zu stark verzerrt wird.

Bei der Erzeugung einer einphasigen Wechselspannung U fester Frequenz $f_N$ wird der Zwischenkreis 4 zusätzlich mit der pendelnden Einphasenleistung, die mit doppelter Nennfrequenz $f_N$ schwingt, belastet. Um diese Schwingung weitgehend von den Zwischenkreis-Kondensatoren 26 und 28 fernzuhalten, wird dem Zwischenkreis 4 ein Saugkreis 10 parallelgeschaltet, der auf die doppelte Nennfrequenz $f_N$ abgestimmt ist. Aufgrund von Schwankungen der Einphasenfrequenz und der Bauteiletoleranzen im Saugkreis 10 werden die Zwischenkreis-Kondensatoren 26 und 28 entsprechend des Impedanzverhältnisses zum Saugkreis 10 teilweise mit dieser schwingenden Leistung belastet.

Bei sehr niedrigen Einphasenfrequenzen, beispielsweise 16 2/3 Hz des Bahnnetzes, führt diese Vollblocktaktung zu hohen Welligkeiten der Zwischenkreis-Spannung $U_d$. Speziell durch die halbseitige Belastung der Teilzwischenkreise der Dreipunkt-Schaltung schwingt der Zwischenkreismittelpunkt 24 mit der Einphasengrundfrequenz.

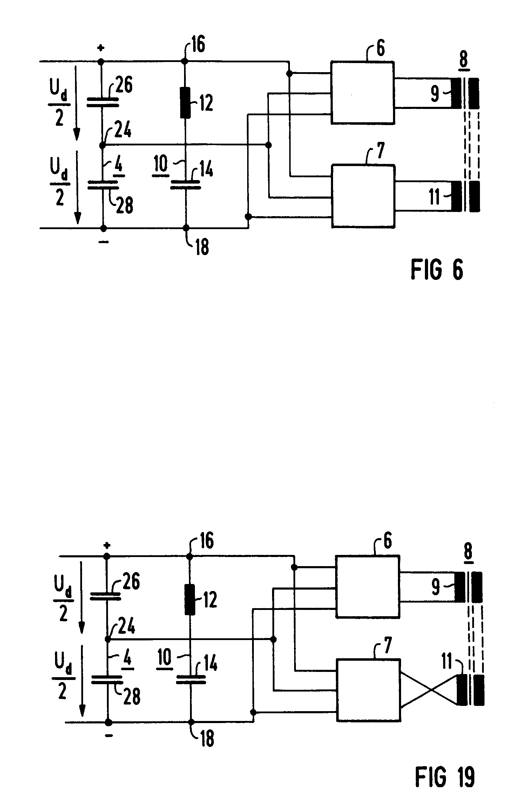

In der Figur 6 ist eine erste Ausführungsform eines Dreipunktumrichters mit zwei Dreipunkt-Vierquadranten-Stellern 6 und 7 näher dargestellt, wobei auf den eingangsseitigen Dreipunkt-Pulswechselrichter und die Steuer- und Regelungseinrichtungen verzichtet wurde. Jeder Dreipunkt-Vierquadranten-Steller 6 bzw. 7 weist ausgangsseitig jeweils eine Wicklung 9 bzw. 11 auf. Diese Wicklungen 9 und 11 sind Primärwicklungen des Transformators 8. Diese beiden Dreipunkt-Vierquadranten-Steller 6 und 7 sind elektrisch parallel zum Dreipunkt-Zwischenkreis 4 geschaltet, der mit einem parallelen Saugkreis 10 elektrisch leitend verbunden ist.

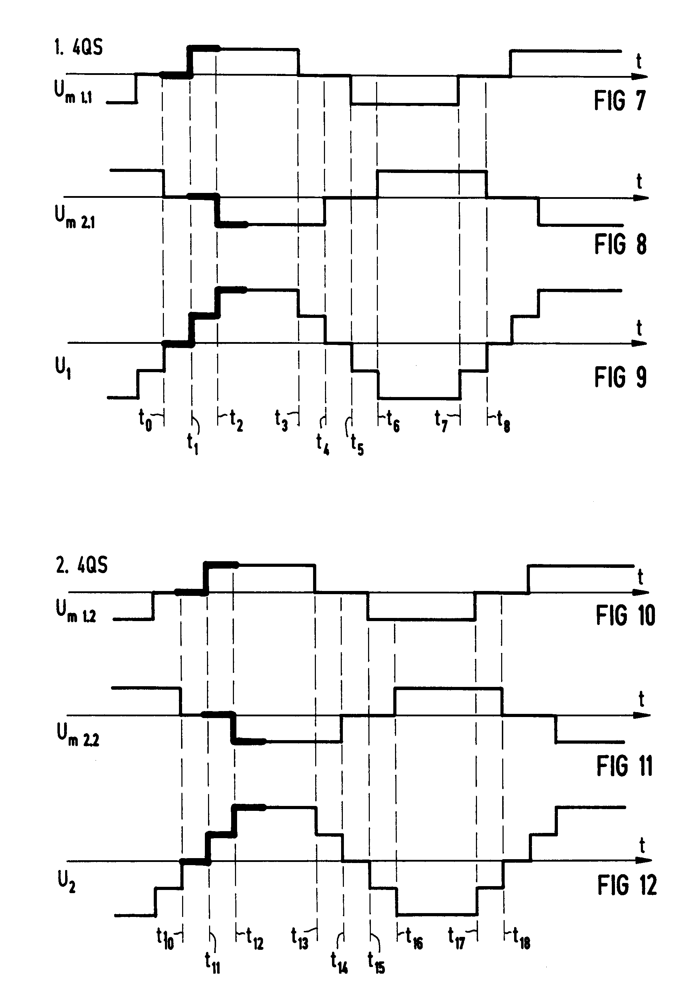

In den Figuren 7 und 8 sind die Grundfrequenztaktmuster $U_{m1.1}$ und $U_{m2.1}$ für den Dreipunkt-Vierquadranten-Steller 6 in einem Diagramm über der Zeit t dargestellt. Die vom Steller 6 mittels diesem Taktmuster $U_{m1.1}$ und $U_{m2.1}$ erzeugte Ausgangsspannung $U_1$ ist in der Figur 9 in einem Diagramm über der Zeit t dargestellt. Die zum Steller 7 zugehörigen Grundfrequenztaktmuster $U_{m1.2}$ und $U_{m2.2}$ sind in den Figuren 10 und 11 jeweils in einem Diagramm über der Zeit t dargestellt. Auch dieser Steller 7 erzeugt mittels einer derartigen Steuerung eine Ausgangsspannung $U_2$, die in der Figur 12 in einem Diagramm über der Zeit t dargestellt ist. Wie diese Figuren 7 bis 12 zeigen, werden die Spannung $U_1$ und $U_2$ zweier Dreipunkt-Vierquadranten-Steller 6 und 7 auf die gleiche Art und Weise erzeugt. Bei der Bezeichnung des Grundfrequenztaktmusters gibt die erste Indexzahl an, welche Phase des Stellers 6 bzw. 7 gemeint ist und die zweite Indexzahl gibt die Nummer des Stellers 6 bzw. 7 an. Wie den Diagrammen zu entnehmen ist, werden die Stufen der positiven Spannungshalbschwingung dadurch gebildet, daß zuerst eine erste Phase eines Stellers 6 bzw. 7 die positive Zwischenkreis-Spannung $U_d$ durchschaltet, während die zweite Phase noch mit dem Zwischenkreismittenanschluß 24 verbunden ist. Während dieser Zeit ist der Zwischenkreis 4 nur halbseitig belastet. Danach schaltet die zweite Phase die negative Zwischenkreisspannung durch. Damit sind beide Zwischenkreishälften wieder gleich belastet. Der zweite Dreipunkt-Vierquadranten-Steller 7 wird genauso gesteuert, nur daß alle Steuerimpulse 15° später erfolgen. Dieses Steuerverfahren führt zu einer im wesentlichen gleichzeitigen einseitigen Zwischenkreis-Belastung durch beide Dreipunkt-Vierquadranten-Steller 6 und 7.

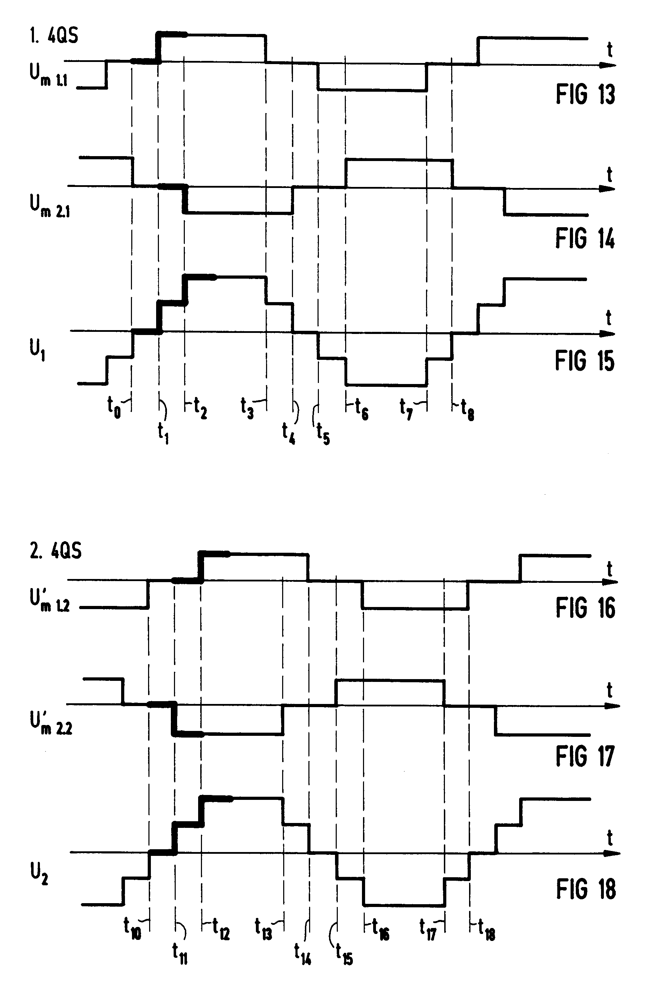

Um die multiplikative Erhöhung der Spannungsschwingung des Zwischenkreismittelpunktes entsprechend der Dreipunkt-Vierquadranten-Steller-Anzahl zu vermeiden, sind die beiden Dreipunkt-Vierquadranten-Steller 6 und 7 so zu steuern, daß innerhalb der Zeitintervalle, bei denen die Ausgangsspannung $U_1$ bzw. $U_2$ betragsmäßig gleich der halben Zwischenkreis-Spannung $U_d$ beträgt, ein Dreipunkt-Vierquadranten-Steller 6 den oberen Zwischenkreiskondensator 26 und ein anderer Dreipunkt-Vierquadranten-Steller 7 den unteren Zwischenkreiskondensator 28 belastet. Diese Forderung kann durch eine Taktmusterverschiebung jeweils beim zweiten Dreipunkt-Vierquadranten-Steller 7 erfüllt werden (Figuren 13 bis 18).

Die Bildung der Ausgangsspannungsstufen für die positive Halbschwingung der Ausgangsspannung $U_2$ des zweiten Dreipunkt-Vierquadranten-Steller 7 (Figur 18) erfolgt in der Reihenfolge, daß eine Phase zuerst die negative Zwischenkreisspannung und die zweite Phase dann die positive Zwischenkreisspannung (Figur 17 und 16) durchschaltet. Gegenüber dem Grundfrequenztaktmuster $U_{m1.1}$ (Figur 7 bzw. 13) eilt dieses Grundfrequenztaktmuster $U'_{m1.2}$ (Figur 16) um 45° nach und das Grundfrequenztaktmuster $U'_{m2.2}$ dieses erfindungsgemäßen Verfahrens (Figur 17) eilt dem entsprechenden bekannten Grundfrequenztaktmuster $U_{m2.1}$ (Figur 8 bzw. 14) um 15° vor.

Unter der Annahme, daß der Strom und die Spannung $U_1$ des Dreipunktwechselrichters 6 in Phase sind und beide Dreipunkt-Vierquadranten-Steller 6 und 7 die gleiche Scheinleistung übertragen, zeigt die nachfolgende Tabelle eine Gegenüberstellung der einseitigen Zwischenkreis-Belastung beim Betrieb zweier Dreipunkt-Vierquadranten-Steller 6 und 7 mit und ohne erfindungsgemäße Taktmusterverschiebung beim zweiten Dreipunkt-Vierquadranten-Steller 7.

| | ohne | | mit | |
| --- | --- | --- | --- | --- |
| | Taktmusterverschiebung | | | |
| Intervall | oberer Kondensator | | oberer Kondensator | |
| | Aufladen | Entladen | Aufladen | Entladen |
| $t_0 - t_{10}$ | | X | X | |
| $t_{10} - t_1$ | | | | |
| $t_1 - t_{11}$ | | X | | X |
| $t_{11} - t_2$ | | XX | | |
| $t_2 - t_{12}$ | | X | X | |
| $t_{12} - t_3$ | | | | |
| $t_3 - t_{13}$ | X | | X | |
| $t_{13} - t_4$ | XX | | | |
| $t_4 - t_{14}$ | X | | | X |
| $t_{14} - t_5$ | | | | |
| $t_5 - t_{15}$ | X | | X | |
| $t_{15} - t_6$ | XX | | | |
| $t_6 - t_{16}$ | X | | | X |
| $t_{16} - t_7$ | | | | |
| $t_7 - t_{17}$ | | X | | X |
| $t_{17} - t_8$ | | XX | | |

Durch die Verwendung dieser beispielhaft angegebenen Taktmusterverschiebung tritt im dargestellten Fall die einseitige Zwischenkreis-Belastung durch beide Dreipunkt-Vierquadranten-Steller 6 und 7 nie gleichzeitig auf. Die einseitige Zwischenkreis-Belastung wechselt doppelt so häufig die Zwischenkreisseite, und die effektive Stromzeitfläche, bei der nur eine Zwischenkreishälfte belastet ist, sinkt mit abnehmender Phasenverschiebung beider Dreipunkt-Vierquadranten-Steller-Ausgangsspannungen $U_1$ und $U_2$.

Bei der dargestellten Phasenverschiebung der beiden Dreipunkt-Vierquadranten-Steller-Ausgangsspannungen $U_1$ und $U_2$ von 15° sind damit die Stromzeitflächen nur halb so groß, so daß bei gleicher Größe der Zwischenkreis-Kondensatoren 26 und 28 im Vergleich zur Steuerung ohne Taktmusterverschiebung beim zweiten Dreipunkt-Vierquadranten-Steller 7 die doppelte Leistung übertragen werden kann.

Haben beide Ausgangsspannungen $U_1$ und $U_2$ keine Phasenverschiebung zueinander, so sind die Zeitintervalle $t_{1n} - t_n$ gleich Null und die Spannungsschwingung am Zwischenkreismittelpunkt mit Grundfrequenz entfallen. Die restlichen Spannungsschwankungen ergeben sich durch die Oberschwingungen des Ausgangsstromes und die nicht ideale Abstimmung des Saugkreises für die pendelnde Einphasenleistung.

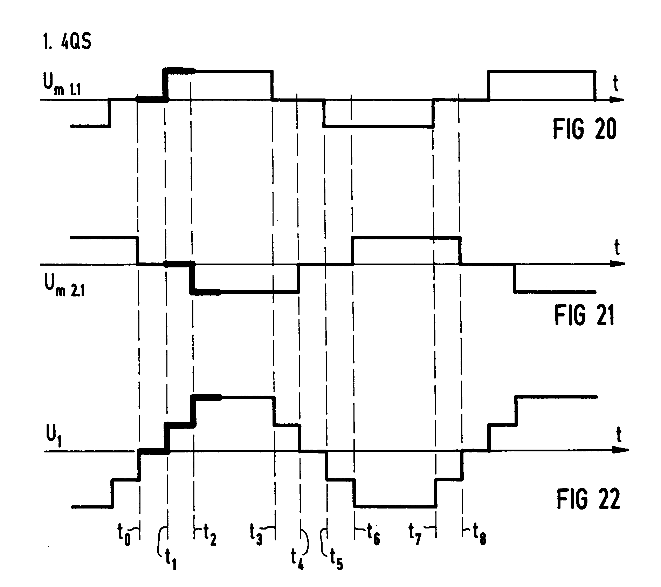

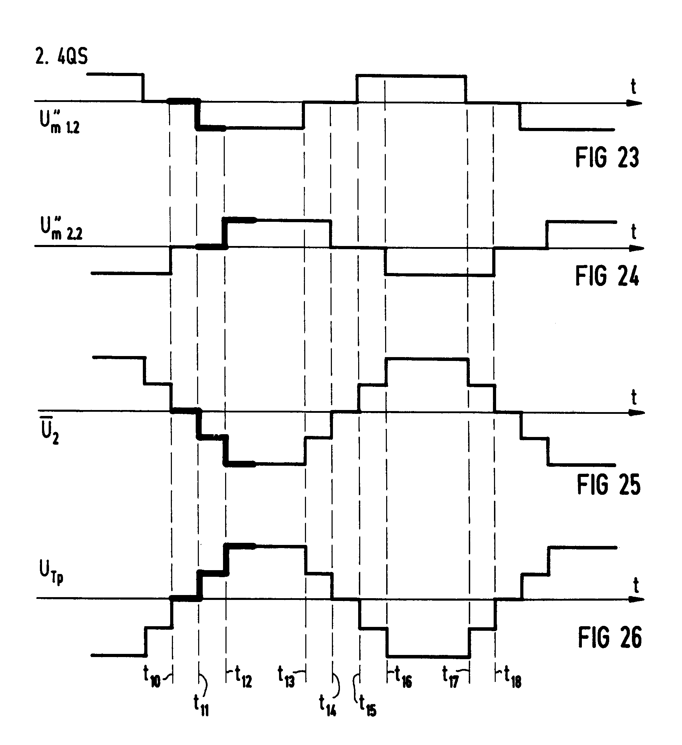

In Figur 19 ist eine weitere Ausführungsform eines Dreipunktumrichters näher dargestellt. Diese Ausführungsform unterscheidet sich zur Ausführungsform nach Figur 6 dadurch, daß die Wicklungsanschlüsse der Wicklung 11 vertauscht sind. Außerdem sind die Grundfrequenztaktmuster $U''_{m1.1}$ und $U''_{m2.2}$ (Figuren 23 und 24) für den zweiten Dreipunkt-Vierquadranten-Steller 7 gegenüber den Grundfrequenztaktmustern $U_{m1.2}$ und $U_{m2.2}$ (Figuren 10 und 11) ohne Taktverschiebung um 180° phasenverschoben. Mit diesen Grundfrequenztaktmustern $U''_{m1.2}$ und $U''_{m2.2}$ wird mittels des Stellers 7 eine Ausgangsspannung $\overline{U}_2$ (Figur 25) erzeugt, die gegenüber

6

der Ausgangsspannung $U_2$ (Figuren 12 bzw. 18) um 180° phasenverschoben ist. Zur Kompensation dieser Phasenverschiebung sind die Wicklungsanschlüsse der Wicklung 11 vertauscht. An der Wicklung 11 fällt dann die Transformatorspannung $U_{Tp}$ ab, die gegenüber der Ausgangsspannung $U_1$ der ersten Dreipunkt-Vierquadranten-Steller 6 eine Phasenverschiebung von 15° aufweist.

Mittels dieser zweiten Methode tritt die einseitige Zwischenkreis-Belastung durch beide Dreipunkt-Vierquadranten-Steller 6 und 7 nie gleichzeitig auf. Somit reduziert sich die Spannungsschwingung des Zwischenkreismittelpunktes erheblich.

Werden mehr als zwei Dreipunkt-Vierquadranten-Steller an einem Dreipunkt-Zwischenkreis 4 betreiben, so sind jeweils zwei Dreipunkt-Vierquadranten-Steller mit möglichst kleiner Phasenverschiebung zwischen ihnen zu einer Gruppe zusammenzufassen. Jedes Dreipunkt-Vierquadranten-Steller-Paar sollte dann nach einem der angegebenen Verfahren angesteuert werden.

Zur weiteren Verkleinerung der Mittelpunktschwingung des Dreipunkt-Zwischenkreises 4 kann dieses angegebene Steuerverfahren mit einer in einer parallelen europäischen Patentanmeldung EP-A-0 534 285 angemeldeten Saugkreis-Schaltungsanordnung kombiniert werden. Durch die Anwendung der Taktmusterverschiebung und die Verwendung der Saugkreis-Schaltungsanordnung bei einem statischen Netzkupplungsumformer konnte der Kapazitätswert pro Teilkondensator 26 bzw. 28 des Dreipunkt-Zwischenkreises 4 von 30mF auf 15 mF halbiert werden, wodurch im Fehlerfall die Beherrschung der Kurzschlußströme erheblich verbessert werden konnte.

**Patentansprüche**

1.  Verfahren zur Reduzierung von Spannungsschwingungen eines Zwischenkreismittenanschlusses (24) eines Teilkondensatoren enthaltenden Dreipunkt-Zwischenkreises (4) eines Spannungszwischenkreisumrichters zur Erzeugung einer einphasigen Spannung mit vorbestimmter Grundfrequenz ($f_N$), wobei auf seiner Einphasenseite ein erster und ein zweiter Dreipunkt-Vierquadranten-Steller (6,7) vorgesehen sind, die jeweils eingangsseitig mit dem Dreipunkt-Zwischenkreis (4) verbunden sind und die jeweils mittels zweier Grundfrequenztaktmuster ($U_{m1.1}, U_{m2.1}; U_{m1.2}, U_{m2.2}$) eine einphasige Ausgangsspannung ($U_1; U_2$) mit vorbestimmter Grundfrequenz ($f_N$) erzeugen, die gegeneinander phasenverschoben sind, **dadurch gekennzeichnet**, daß die beiden Grundfrequenztaktmuster ($U_{m1.2}, U_{m2.2}$) des zweiten Dreipunkt-Vierquadranten-Stellers (7) zu den Grundfrequenztaktmustern ($U_{m1.1}, U_{m2.1}$) des ersten Dreipunkt-Vierquadranten-Stellers (6) derart phasenverschoben werden, daß innerhalb von Zeitintervallen ($t_2-t_1, t_{12}-t_{11},...$), bei denen betragsmäßig die Amplitude einer Ausgangsspannung ($U_1, U_2$) gleich der halben Zwischenkreis-Spannung ($U_d$) ist, der erste Dreipunkt-Vierquadranten-Steller (6) einen ersten Teilkondensator (26) und der zweite Dreipunkt-Vierquadranten-Steller (7) einen zweiten Teilkondensator (28) des Dreipunkt-Zwischenkreis (4) belastet.

2.  Verfahren nach Anspruch 1, **dadurch gekennzeichnet**, daß das Grundfrequenztaktmuster ($U_{m1.2}$) für eine erste Phase des zweiten Dreipunkt-Vierquadranten-Stellers (7) gegenüber dem Grundfrequenztaktmuster ($U_{m1.1}$) für eine erste Phase (20) des ersten Dreipunkt-Vierquadranten-Stellers (6) um 45° nacheilt und das Grundfrequenztaktmuster ($U_{m2.2}$) für eine zweite Phase des zweiten Dreipunkt-Vierquadranten-Stellers (7) gegenüber dem Grundfrequenztaktmuster ($U_{m2.1}$) für eine zweite Phase (22) des ersten Dreipunkt-Vierquadranten-Stellers (6) um 15° voreilt.

3.  Verfahren nach Anspruch 1, **dadurch gekennzeichnet**, daß das Grundfrequenztaktmuster ($U_{m1.2}$) für eine erste Phase des zweiten Dreipunkt-Vierquadranten-Stellers (7) gegenüber dem Grundfrequenztaktmuster ($U_{m1.1}$) für eine erste Phase (20) des ersten Dreipunkt-Vierquadranten-Stellers (6) und das Grundfrequenztaktmuster ($U_{m2.2}^*$) für eine zweite Phase des zweiten Dreipunkt-Vierquadranten-Stellers (7) gegenüber dem Grundfrequenztaktmuster ($U_{m2.1}$) für eine zweite Phase (22) des ersten Dreipunkt-Vierquadranten-Stellers (6) jeweils um 195° nacheilt, wobei die Ausgangsklemmen des zweiten Dreipunkt-Vierquadranten-Stellers (7) vertauscht sind.

4.  Verfahren nach Anspruch 1, wobei auf der Einphasenseite des Spannungszwischenkreisumrichters mehr als zwei Dreipunkt-Vierquadranten-Steller eingangsseitig mit dem Dreipunkt-Zwischenkreis (4) verbunden sind, deren Ausgangsspannungen jeweils untereinander phasenverschoben sind, **dadurch gekennzeichnet**, daß jeweils zwei Dreipunkt-Vierquadranten-Steller, deren Ausgangsspannungen eine kleine Phasenverschiebung aufweisen, zu einem Dreipunkt-Vierquadranten-Stellerpaar funktionell zusammengefaßt werden, wobei jedes Dreipunkt-Vierquadranten-Stellerpaar als ein Dreipunkt-Vierquadranten-Steller (6,7) steuerungsmäßig behandelt wird.

**Claims**

1. Method for reducing voltage oscillations of an intermediate-circuit centre terminal (24) of a three-point intermediate circuit (4) of a voltage intermediate-circuit converter, containing partial capacitors, for the generation of a single-phase voltage with predetermined fundamental frequency ($f_N$), whereby on its single-phase side a first and a second three-point four-quadrant controller (6, 7) are provided, each of which is connected on the input side to the three-point intermediate circuit (4) and each of which generates by means of two fundamental-frequency clock patterns ($U_{m1.1}$, $U_{m2.1}$; $U_{m1.2}$, $U_{m2.2}$) a single-phase output voltage ($U_1$; $U_2$) with predetermined fundamental frequency ($f_N$), which are out of phase relative to each other, characterized in that the two fundamental-frequency clock patterns ($U_{m1.2}$, $U_{m2.2}$) of the second three-point four-quadrant controller (7) are out of phase with respect to the fundamental-frequency clock patterns ($U_{m1.1}$, $U_{m2.1}$) of the first three-point four-quadrant controller (6) in such a way that within time intervals ($t_2$-$t_1$, $t_{12}$-$t_{11}$,...), where in terms of amount the amplitude of an output voltage ($U_1$, $U_2$) is the same as half the intermediate-circuit voltage ($U_d$), the first three-point four-quadrant controller (6) loads a first partial capacitor (26) and the second three-point four-quadrant controller (7) loads a second partial capacitor (28) of the three-point intermediate circuit (4).

2. Method according to claim 1, characterized in that the fundamental-frequency clock pattern ($U_{m1.2}$) for a first phase of the second three-point four-quadrant controller (7) in relation to the fundamental-frequency clock pattern ($U_{m1.1}$) for a first phase (20) of the first three-point four-quadrant controller (6) lags behind by 45° and the fundamental-frequency clock pattern ($U_{m2.2}$) for a second phase of the second three-point four-quadrant controller (7) in relation to the fundamental-frequency clock pattern ($U_{m2.1}$) for a second phase (22) of the first three-point four-quadrant controller (6) leads by 15°.

3. Method according to claim 1, characterized in that the fundamental-frequency clock pattern ($U_{m1.2}$) for a first phase of the second three-point four-quadrant controller (7) in relation to the fundamental-frequency clock pattern ($U_{m1.1}$) for a first phase (20) of the first three-point four-quadrant controller (6) and the fundamental-frequency clock pattern ($U_{m2.2}$) for a second phase of the second three-point four-quadrant controller (7) in relation to the fundamental-frequency clock pattern ($U_{m2.1}$) for a second phase (22) of the first three-point four-quadrant controller (6) lags behind in each case by 195°, whereby the output terminals of the second three-point four-quadrant controller (7) are reversed.

4. Method according to claim 1, whereby on the single-phase side of the voltage intermediate-circuit converter more than two three-point four-quadrant controllers are connected on the input side to the three-point intermediate circuit (4), the output voltages of which are in each case out of phase in relation to each other, characterized in that in each case two three-point four-quadrant controllers, the output voltages of which have a small phase displacement, are functionally combined into a three-point four-quadrant controller pair, whereby each three-point four-quadrant controller pair is treated as a three-point four-quadrant controller (6, 7) in terms of control.

**Revendications**

1. Procédé pour réduire des oscillations de tension d'une borne médiane (24) d'un circuit intermédiaire (4) à trois points , contenant des condensateurs partiels, d'un convertisseur de tension à circuit intermédiaire pour produire une tension monophasée ayant une fréquence de base prédéterminée ($f_N$), selon, lequel sur le côté monophasé du convertisseur sont prévus des premier et second régulateurs à trois points et à quatre quadrants (6,7), qui sont reliés chacun, côté entrée, au circuit intermédiaire à trois points (4) et qui produisent respectivement au moyen de deux profils de cadence à la fréquence de base ($U_{m1.1}$, $U_{m2.1}$; $U_{m1.2}$, $U_{m2.2}$), des tensions de sortie monophasées ($U_1$, $U_2$) de fréquence de base prédéterminée ($f_N$), qui sont en opposition de phase, caractérisé par le fait que l'on déphase les deux profils de cadence à la fréquence de base ($U_{m1.2}$, $U_{m2.2}$) du second régulateur à trois points et à quatre quadrants (7) par rapport aux profils de cadence à la fréquence de base ($U_{m1.1}$, $U_{m2.1}$) du premier régulateur (6) à trois points et à quatre quadrants de telle sorte que pendant des intervalles de temps ($t_2$-$t_1$, $t_{12}$-$t_{11}$, ...), pendant lesquels

8

l'amplitude d'une tension de sortie ($U_1$ et $U_2$) est égale en valeur absolue à la moitié de la tension ($U_d$) du circuit intermédiaire, le premier régulateur (6) à trois points et à quatre quadrants charge un premier condensateur partiel (26) et le second régulateur (7) à trois points et à quatre quadrants charge un second condensateur partiel (28) du circuit intermédiaire à trois points (4).

2. Procédé suivant la revendication 1, caractérisé par le fait que le profil ($U_{m1.2}$) de cadence à la fréquence de base pour une première phase du second régulateur (7) à trois points à quatre quadrants est en retard de 45° par rapport au profil ($U_{m1.1}$) de cadence à la fréquence de base pour une première phase (20) du premier régulateur (6) à trois points et à quatre quadrants et que le profil ($U_{m2.2}$) de cadence à la fréquence de base pour une seconde phase du second régulateur (7) à trois points et à quatre quadrants est en avance de 15° par rapport au profil ($U_{m2.1}$) de cadence à la fréquence de base pour une seconde phase (22) du premier régulateur (6) à trois points et à quatre quadrants.

3. Procédé suivant la revendication 1, caractérisé par le fait que le profil ($U_{m1.2}$) de cadence à la fréquence de base pour une première phase du second régulateur (7) à trois points et à quatre quadrants est en retard de 195° par rapport au profil ($U_{m1.1}$) de cadence à la fréquence de base pour une première phase (20) du premier régulateur (6) à trois points et à quatre quadrants et que le profil ($U_{m2.2}$) de cadence à la fréquence de base pour une seconde phase du second régulateur (7) à trois points et à quatre quadrants est en retard de 195° par rapport au profil ($U_{m2.1}$) de cadence à la fréquence de base pour une seconde phase (22) du premier régulateur (6) à trois points et à quatre quadrants, les bornes de sortie du second régulateur (7) à trois points et à quatre quadrants étant permutées.

4. Procédé suivant la revendication 1, selon lequel du côté monophasé du convertisseur de tension à circuit intermédiaire, plus de deux régulateurs à trois points et à quatre quadrants sont reliés côté entrée au circuit intermédiaire (4) à trois points, dont les tensions de sortie sont réciproquement déphasées, caractérisé par le fait que respectivement deux régulateurs à trois points et à quatre quadrants, dont les tensions de sortie présentent un faible déphasage, sont réunis du point de vue fonctionnel en un couple de régulateurs à trois points et à quatre quadrants, chaque couple de régulateurs à trois points et à quatre quadrants étant traité, du point de vue de la commande, à la manière d'un régulateur (6,7) à trois points et à quatre quadrants.

FIG 1

$U_d$

FIG 2

$\dfrac{U_d}{2}$

$U_d$

$\dfrac{U_d}{2}$

$U$

$U_m$ 1.Phase

t

FIG 3

$U_m$ 2.Phase

t

FIG 4

U

t

FIG 5

$t_0$  $t_2$  $t_3$  $t_6$  $t_8$

$t_1$  $t_4$  $t_5$  $t_7$

$\dfrac{U_d}{2}$

$\dfrac{U_d}{2}$

16

6

8

26

9

24

12

4

10

14

28

7

18

11

**FIG 6**

$\dfrac{U_d}{2}$

$\dfrac{U_d}{2}$

16

6

8

26

9

24

12

4

10

14

28

7

18

11

**FIG 19**

1. 4QS

$U_{m\,1.1}$

FIG 7

$U_{m\,2.1}$

FIG 8

$U_1$

FIG 9

$t_0$  $t_1$  $t_2$  $t_3$  $t_4$  $t_5$  $t_6$  $t_7$  $t_8$

2. 4QS

$U_{m\,1.2}$

FIG 10

$U_{m\,2.2}$

FIG 11

$U_2$

FIG 12

$t_{10}$  $t_{11}$  $t_{12}$  $t_{13}$  $t_{14}$  $t_{15}$  $t_{16}$  $t_{17}$  $t_{18}$

1. 4QS

$U_{m\,1.1}$

FIG 13

$U_{m\,2.1}$

FIG 14

$U_1$

FIG 15

$t_0$  $t_1$  $t_2$  $t_3$  $t_4$  $t_5$  $t_6$  $t_7$  $t_8$

2. 4QS

$U'_{m\,1.2}$

FIG 16

$U'_{m\,2.2}$

FIG 17

$U_2$

FIG 18

$t_{10}$  $t_{11}$  $t_{12}$  $t_{13}$  $t_{14}$  $t_{15}$  $t_{16}$  $t_{17}$  $t_{18}$

1. 4QS

FIG 20

FIG 21

FIG 22

EP 0 534 242 B1

2. 4QS

$U''_{m\,1.2}$

**FIG 23**

$U''_{m\,2.2}$

**FIG 24**

$\overline{U}_2$

**FIG 25**

$U_{Tp}$

**FIG 26**

$t_{10}$  $t_{11}$  $t_{12}$  $t_{13}$  $t_{14}$  $t_{15}$  $t_{16}$  $t_{17}$  $t_{18}$